# EUROPEAN PATENT APPLICATION

(11) **EP 3 162 237 A1**
(43) Date of publication of application: **03.05.2017**
(21) Application number: 16186747.8
(22) Date of filing: 01.09.2016
(51) Int. Cl.: A42B 3/30

(54) **COMMUNICATION HELMET**

(30) Priority: 26.10.2015 TW 104217128
(71) Applicant: Jarvish Inc., Taipei City (TW)
(72) Inventor: Younger, Liang, (R.O.C.) Taipei City (TW)
(74) Representative: Klemm, Rolf

(57) **Abstract**

A communication helmet (100, 200) includes a helmet main body (10, 20), a control unit (11, 21), a pickup unit (12, 22), a speaker unit (13, 23) and a wireless transmission unit (14, 24). The control unit (11, 21) is connected with the pickup unit (12, 22), speaker unit (13, 23) and wireless transmission unit (14, 24). The pickup unit (12, 22) receives a first audio signal input by a first user. The speaker unit (13, 23) outputs a second audio signal, which is transmitted from another communication helmet (100, 200) of a second user. The wireless transmission unit (14, 24) is wirelessly connected with the other communication helmet (100, 200) for transmitting the first audio signal and receiving the second audio signal. By means of the communication helmet (100, 200), when riding a motorcycle, a rider can communicate with a passenger sitting on the back seat to clearly transmit information to the passenger and at the same time keep watching the condition in front of the motorcycle. Therefore, the safety in riding is promoted.

## Description

### BACKGROUND OF THE INVENTION

### 1. Field of the Invention

The present invention relates generally to a communication helmet, and more particularly to a communication helmet, which enables a motorcycle rider to clearly transmit information to a passenger and promote safety in riding.

### 2. Description of the Related Art

It is regulated in traffic regulations that when riding power machinery (motorcycle), a rider must wear a helmet. There are various helmets on the current market. The most important function of the helmet is to protect the parts above a rider's neck and prevent the user's head from getting hurt. An ordinary helmet lacks any additional function.

In addition, when a rider rides a motorcycle, it is unnecessary for the rider to talk to anybody else so that the rider can wear a helmet without any problem. However, when two persons ride a motorcycle together, the rider and the passenger often need to talk to each other. Under such circumstance, the helmets often hinder the rider and the passenger from clearly transmitting their voices to each other. In order to more clearly transmit the information to each other, the rider often needs to turn his/her head to talk to the passenger sitting on the back seat. Under such circumstance, the line of sight of the rider will deflect from the front side or left and right sides of the motorcycle that need to be watched. In this case, an accident or danger is apt to happen to the rider and the passenger in riding.

It is therefore tried by the applicant to provide a communication helmet, which enables a motorcycle rider to clearly transmit information and talk to a passenger sitting on the back seat, while at the same time keeping watching the condition in front of the motorcycle.

### SUMMARY OF THE INVENTION

It is therefore a primary object of the present invention to provide a communication helmet, which enables a motorcycle rider to clearly transmit information and talk to a passenger sitting on the back seat.

It is a further object of the present invention to provide the above communication helmet, which enables a motorcycle rider to clearly talk to a passenger sitting on the back seat, while at the same time keeping watching the condition in front of the motorcycle.

To achieve the above and other objects, the communication helmet of the present invention includes a helmet main body, a control unit, a pickup unit, a speaker unit and a wireless transmission unit. The control unit is disposed on the helmet main body. The pickup unit is disposed on the helmet main body and connected to the control unit for receiving a first audio signal input by a first user. The speaker unit is disposed on the helmet main body and connected to the control unit for outputting a second audio signal, which is transmitted from another communication helmet of a second user. The wireless transmission unit is disposed on the helmet main body and connected to the control unit. The wireless transmission unit is wirelessly connected with the other communication helmet for transmitting the first audio signal and receiving the second audio signal. By means of the communication helmet of the present invention, when riding a motorcycle, a rider and a passenger can clearly talk to each other, while at the same time keeping watching the condition in front of the motorcycle. Therefore, the safety in riding is promoted.

In the above communication helmet, the control unit is set with connection information. According to the connection information, the control unit is correspondingly coupled to the other communication helmet via the wireless transmission unit.

In the above communication helmet, the wireless transmission unit has a front ultrasonic transceiver and a rear ultrasonic transceiver respectively disposed on the front side and the rear side of the helmet main body. The front and rear ultrasonic transceivers serve to transmit the first audio signal to the other communication helmet or receive the second audio signal from the other communication helmet.

In the above communication helmet, the wireless transmission unit has a radio transceiver disposed on a certain section of the helmet main body. The radio transceiver serves to transmit the first audio signal to the other communication helmet or receive the second audio signal from the other communication helmet.

In the above communication helmet, the wireless transmission unit has a front ultrasonic transceiver, a rear ultrasonic transceiver and a radio transceiver. The front and rear ultrasonic transceivers are respectively disposed on the front side and the rear side of the helmet main body. The radio transceiver is disposed on a certain section of the helmet main body. The control unit serves to transmit the first audio signal to the other communication helmet via the front and rear ultrasonic transceivers or the radio transceiver or receive the second audio signal from the other communication helmet via the front and rear ultrasonic transceivers or the radio transceiver.

In the above communication helmet, the radio transceiver is selected from a group consisting of Bluetooth transceiver, WiMAX transceiver, 3G transceiver, 4G transceiver, 5G transceiver and a Wi-Fi transceiver.

The above communication helmet further includes an encoding/decoding unit. The wireless transmission unit is connected to the control unit via the encoding/decoding unit. The encoding/decoding unit has an analog-to-digital converter and a digital-to-analog converter. The analog-to-digital converter serves to convert the first and second audio signals into a first digital signal and a second digital signal. The digital-to-analog converter serves to convert the first and second digital signals into the first and second audio signals. The control unit serves to transmit the first audio signal to the other communication helmet via the wireless transmission unit and receive the second audio signal from the other communication helmet via the wireless transmission unit.

The above communication helmet further includes an encoding/decoding unit. The wireless transmission unit is connected to the control unit via the encoding/decoding unit. The encoding/decoding unit has an analog-to-digital converter and a digital-to-analog converter. The analog-to-digital converter serves to convert the connection information into a third digital signal. The digital-to-analog converter serves to convert the third digital signals into the connection information. The control unit serves to transmit the connection information to the other communication helmet via the wireless transmission unit and receive the connection information from the other communication helmet via the wireless transmission unit to make the wireless connection.

In the above communication helmet, the control unit is a microcontroller unit or a central processing unit.

In the above communication helmet, the pickup unit is a microphone.

In the above communication helmet, the speaker unit is a speaker.

By means of the communication helmet of the present invention, when riding a motorcycle, a rider and a passenger can clearly transmit information and talk to each other, while at the same time keeping watching the condition in front of the motorcycle. Therefore, the safety in riding is promoted.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a first embodiment of the present invention;
Fig. 2 is a block diagram of the first embodiment of the present invention, showing the function thereof;
Fig. 3 is a perspective view of a second embodiment of the present invention;
Fig. 4 is a block diagram of the second embodiment of the present invention, showing the function thereof;
Fig. 5 is a perspective view of a third embodiment of the present invention; and
Fig. 6 is a block diagram of the third embodiment of the present invention, showing the function thereof.

### DETAILED DESCRIPTION OF THE PREFERRED EMBODIMENTS

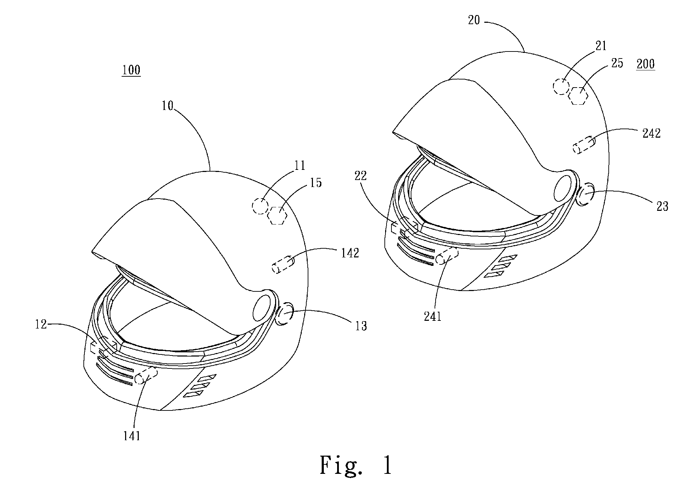

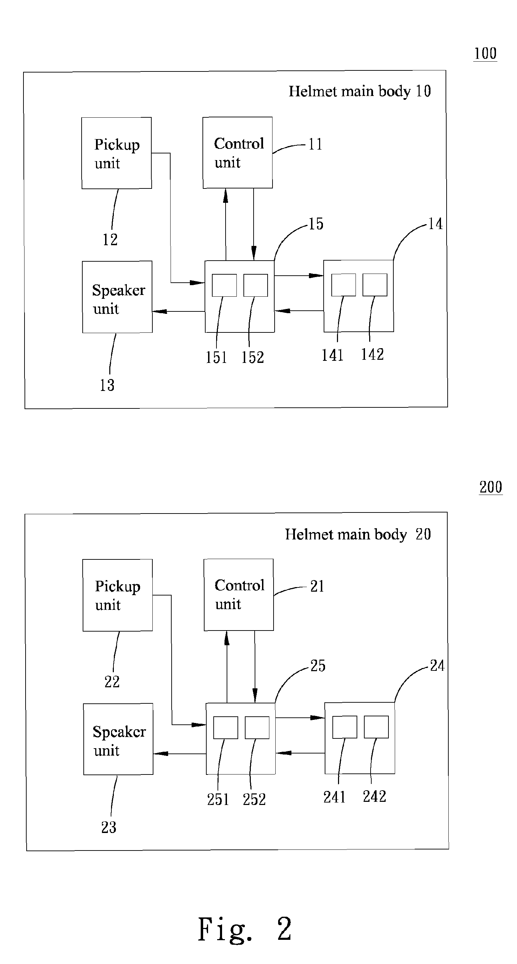

Please refer to Figs. 1 and 2. Fig. 1 is a perspective view of a first embodiment of the present invention. Fig. 2 is a block diagram of the first embodiment of the present invention, showing the function thereof. According to the first embodiment, the communication helmet 100 of the present invention can be any kind and type of helmet. The communication helmet 100 includes a helmet main body 10, a control unit 11, a pickup unit 12, a speaker unit 13, an encoding/decoding unit 15 and a wireless transmission unit 14. The pickup unit 12 is a microphone disposed on the helmet main body 10 in adjacency to a user's mouth for receiving a first audio signal input by a first user. The speaker unit 13 is a speaker disposed on the helmet main body 10 in adjacency to a user's ear for outputting a second audio signal, which is transmitted from another communication helmet 200 of a second user. The pickup unit 12 and the speaker unit 13 are respectively connected to the control unit 11. The other communication helmet 200 includes a helmet main body 20, a control unit 21, a pickup unit 22, a speaker unit 23, an encoding/decoding unit 25 and a wireless transmission unit 24. The other communication helmet 200 is identical to the first communication helmet 100 in unit, structure, connection relationship and effect and thus will not be repeatedly described hereinafter.

The control unit 11 is a microcontroller unit (MCU) or a central processing unit (CPU). The wireless transmission unit 14 is connected to the control unit 11 via the encoding/decoding unit 15. In this embodiment, the encoding/decoding unit 15 is, but not limited to, an independent component disposed in the helmet main body 10 and connected to the control unit 11. In practice, the encoding/decoding unit 15 can be alternatively as a part of the control unit 11. That is, the control unit 11 includes the encoding/decoding unit 15. The encoding/decoding unit 15 has an analog-to-digital converter (ADC) 151 and a digital-to-analog converter (DAC) 152. The analog-to-digital converter 151 serves to convert the voice (the first audio signal) of the rider (the first user) into a first digital signal and transmit the first digital signal to the corresponding control unit 11. Also, the analog-to-digital converter 151 can convert a received second audio signal into a second digital signal and transmit the second digital signal to the control unit 11. The digital-to-analog converter 152 serves to convert the received first digital signal into the first audio signal and transmit the first audio signal to the wireless transmission unit 14. Also, the digital-to-analog converter 152 can convert the received second digital signal into the second audio signal and play the second audio signal via the speaker unit 13.

In addition, the analog-to-digital converter 251 of the encoding/decoding unit 25 of the other communication helmet 200 serves to convert the voice (the second audio signal) of the passenger (the second user) into a second digital signal and transmit the second digital signal to the corresponding control unit 21. Also, the analog-to-digital converter 251 can convert the received first audio signal into a first digital signal and transmit the first digital signal to the control unit 21. The digital-to-analog converter 252 serves to convert the received second digital signal into the second audio signal and transmit the second audio signal to the wireless transmission unit 24. Also, the digital-to-analog converter 252 can convert the received first digital signal into the first audio signal and play the first audio signal via the speaker unit 23.

Moreover, the wireless transmission unit 14 can be wirelessly connected to the wireless transmission unit 24 of the other communication helmet 200 so as to transmit the first audio signal and receive the second audio signal. In this embodiment, the wireless transmission unit 14 has a front ultrasonic transceiver 141 and a rear ultrasonic transceiver 142 respectively disposed on the front side and the rear side of the helmet main body 100. When the first user is a motorcycle rider and the second user is a passenger, both the first and second users can wear the communication helmets. At this time, in the case the rider wants to communicate with the passenger, the rider can talk to the pickup unit 12 in the helmet main body 100 (input the first audio signal). At this time, via the rear ultrasonic transceiver 142 of the wireless transmission unit 14, the control unit 11 transmits the first audio signal to the front ultrasonic transceiver 241 of the other communication helmet 200 worn on the passenger. After the front ultrasonic transceiver 241 of the other communication helmet 200 worn on the passenger receives the first audio signal, the speaker unit 23 plays out the first audio signal (output the first audio signal) for the passenger to hear the voice of the first user (the rider).

When the passenger talks to the pickup unit 22 (input the second audio signal), via the front ultrasonic transceiver 241 of the helmet main body 200, the control unit 21 transmits the second audio signal to the rear ultrasonic transceiver 142 of the communication helmet 100 worn on the rider. After the rear ultrasonic transceiver 142 of the communication helmet 100 worn on the rider receives the second audio signal, the speaker unit 13 plays out the second audio signal (output the second audio signal) for the rider to hear the voice of the passenger.

The control unit 11 is set with connection information. According to the connection information, the control unit 11 is correspondingly coupled to the other communication helmet 200 via the wireless transmission unit 14. That is, the two communication helmets transmit the connection information to each other for making the wireless connection. The connection information can be set to be the relationship between the two corresponding communication helmets. For example, in the case that the relationship between the users of the two communication helmets is the relationship between a rider and a passenger, they can communicate with each other. Alternatively, when one communication helmet 100 requests to connect with the corresponding other communication helmet 200, the corresponding other communication helmet 200 can choose to accept or refuse the connection request. For example, the analog-to-digital converter 151 of the encoding/decoding unit 15 can convert the connection information received by the wireless transmission unit 14 from the other communication helmet 200 into a third digital signal and the transmit the third digital signal to the control unit 11. The control unit 11 will judge whether the other communication helmet 200 is connectable. In so, the digital-to-analog converter 152 of the encoding/decoding unit 15 converts the third digital signal into the connection information and transmits the connection information to the other communication helmet 200 via the wireless transmission unit 14. The analog-to-digital converter 251 of the encoding/decoding unit 25 of the other communication helmet 200 can convert the connection information received by the wireless transmission unit 24 from the communication helmet 100 into a third digital signal and transmit the third digital signal to the control unit 21. At this time, the coupling connection process is completed. However, it should be noted that in practice, the coupling connection manner between the communication helmets is not limited to this and a third user can join the connection between the communication helmets.

In this embodiment, when the other communication helmet 200 worn on the passenger and the communication helmet 100 worn on the rider get close to each other, via the digital-to-analog converter 252 of the encoding/decoding unit 25, the control unit 21 of the other communication helmet 200 converts the third digital signal into the connection information. Then, the front ultrasonic transceiver 241 of the wireless transmission unit 24 transmits the connection information to the rear ultrasonic transceiver 142 of the communication helmet 100 worn on the rider. The analog-to-digital converter 151 of the encoding/decoding unit 15 of the communication helmet 100 converts the connection information received by the rear ultrasonic transceiver 142 into the third digital signal and transmits the third digital signal to the control unit 11. After the control unit 11 judges that the other communication helmet 200 is a connectable device, the digital-to-analog converter 152 of the encoding/decoding unit 15 converts the third digital signal into the connection information and the rear ultrasonic transceiver 142 of the wireless transmission unit 14 transmits the connection information to the front ultrasonic transceiver 241 of the other communication helmet 200 worn on the passenger. The analog-to-digital converter 251 of the encoding/decoding unit 25 of the other communication helmet 200 converts the connection information received by the front ultrasonic transceiver 241 into the third digital signal and transmits the third digital signal to the control unit 21. The control unit 11 then receives the third digital signal to complete the coupling connection process. However, it should be noted that in practice, the coupling connection between the communication helmets can be started by the rider or started by a third user to join the coupling connection.

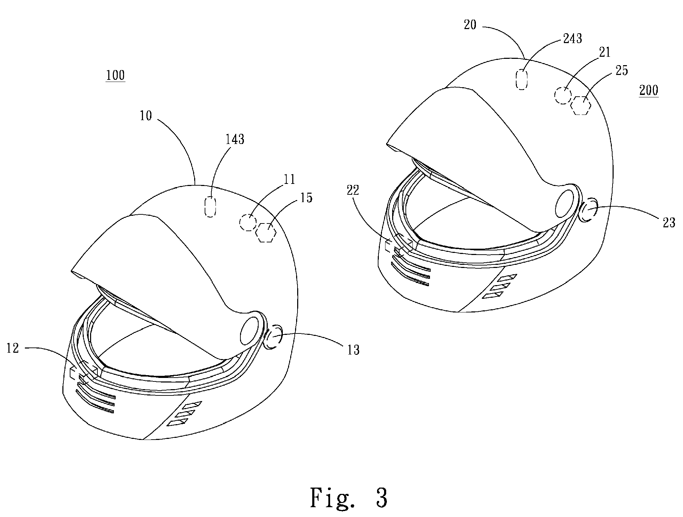

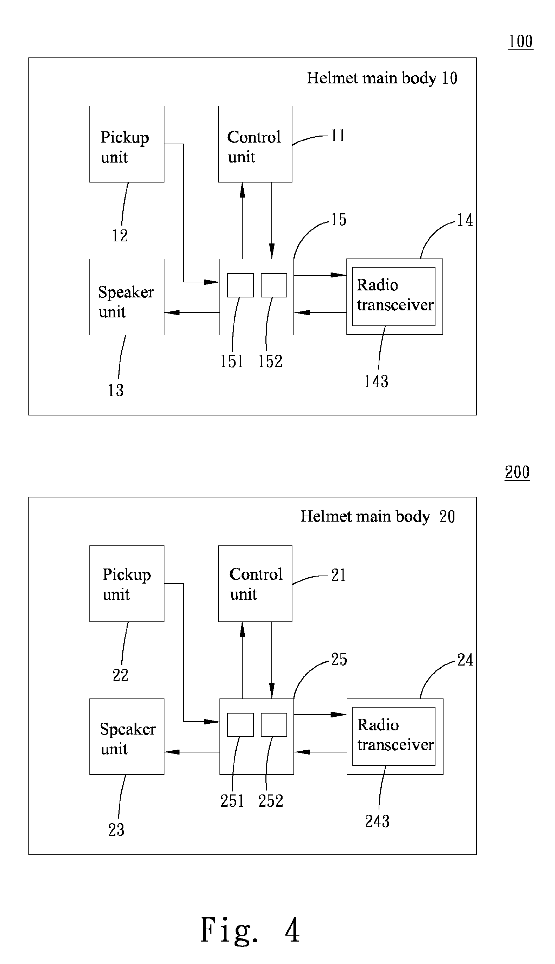

Please now refer to Figs. 3 and 4. Fig. 3 is a perspective view of a second embodiment of the present invention. Fig. 4 is a block diagram of the second embodiment of the present invention, showing the function thereof. The second embodiment is substantially partially identical to the first embodiment in structure, component function and effect and thus will not be repeatedly described hereinafter. The second embodiment is mainly different from the first embodiment in that the wireless transmission unit 14 of the second embodiment only has one single radio transceiver 143 instead of the front and rear ultrasonic transceivers 141, 142 of the first embodiment. Also, in the second embodiment, the other communication helmet is identical to the communication helmet in unit, structure, connection relationship and effect and thus will not be repeatedly described hereinafter. The wireless transmission unit 14 has a radio transceiver 143 disposed on a certain section of the helmet main body 10. In this embodiment, the radio transceiver 143 is, but not limited to, a Bluetooth transceiver for illustration purposes. In practice, the radio transceiver 143 can be any other transceiver such as a WiMAX transceiver, a 3G transceiver, a 4G transceiver, a 5G transceiver or a Wi-Fi transceiver.

Accordingly, when the first user is a motorcycle rider and the second user is a passenger, both the first and second users can wear the communication helmets. At this time, in the case the rider wants to communicate with the passenger, the rider can talk to the pickup unit 12 in the helmet main body 100 (input the first audio signal). At this time, via the radio transceiver 143 (the Bluetooth transceiver) of the wireless transmission unit 14, the control unit 11 transmits the first audio signal to the radio transceiver 243 of the other communication helmet 200 worn on the passenger. After the radio transceiver 243 of the other communication helmet 200 worn on the passenger receives the first audio signal, the speaker unit 23 plays out the first audio signal (output the first audio signal) for the passenger to hear the voice of the first user (the rider).

When the passenger talks to the pickup unit 22 (input the second audio signal), via the radio transceiver 243 of the helmet main body 200, the control unit 21 transmits the second audio signal to the radio transceiver 143 of the communication helmet 100 worn on the rider. After the radio transceiver 143 of the communication helmet 100 worn on the rider receives the second audio signal, the speaker unit 13 plays out the second audio signal (output the second audio signal) for the rider to hear the voice of the passenger.

In this embodiment, when the other communication helmet 200 worn on the passenger and the communication helmet 100 worn on the rider get close to each other, via the digital-to-analog converter 252 of the encoding/decoding unit 25, the control unit 21 of the other communication helmet 200 converts the third digital signal into the connection information. Then, the radio transceiver 243 (the Bluetooth transceiver) transmits the connection information to the radio transceiver 143 (the Bluetooth transceiver) of the communication helmet 100 worn on the rider. The analog-to-digital converter 151 of the communication helmet 100 converts the received connection information into the third digital signal and transmits the third digital signal to the control unit 11. After the control unit 11 judges that the other communication helmet 200 is a connectable device, via the digital-to-analog converter 152, the control unit 11 converts the third digital signal into the connection information and then the radio transceiver 143 (the Bluetooth transceiver) transmits the connection information to the radio transceiver 243 (the Bluetooth transceiver) of the other communication helmet 200 worn on the passenger. The analog-to-digital converter 251 of the other communication helmet 200 converts the connection information received by the radio transceiver 243 (the Bluetooth transceiver) into the third digital signal and transmits the third digital signal to the control unit 21.

The control unit 11 then receives the third digital signal to complete the coupling connection process.

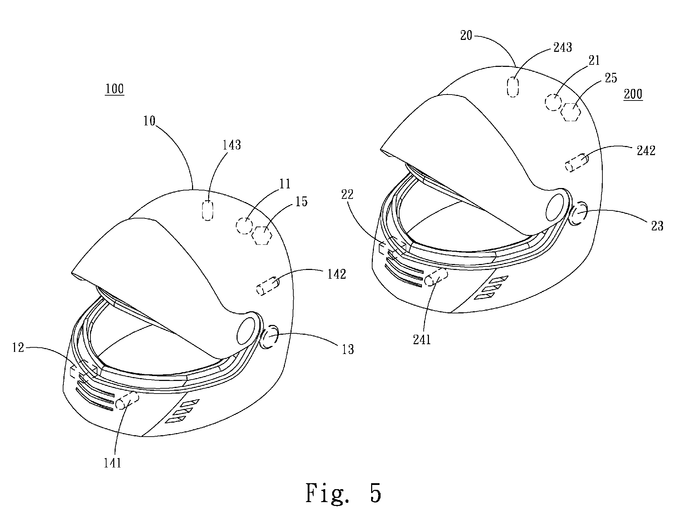

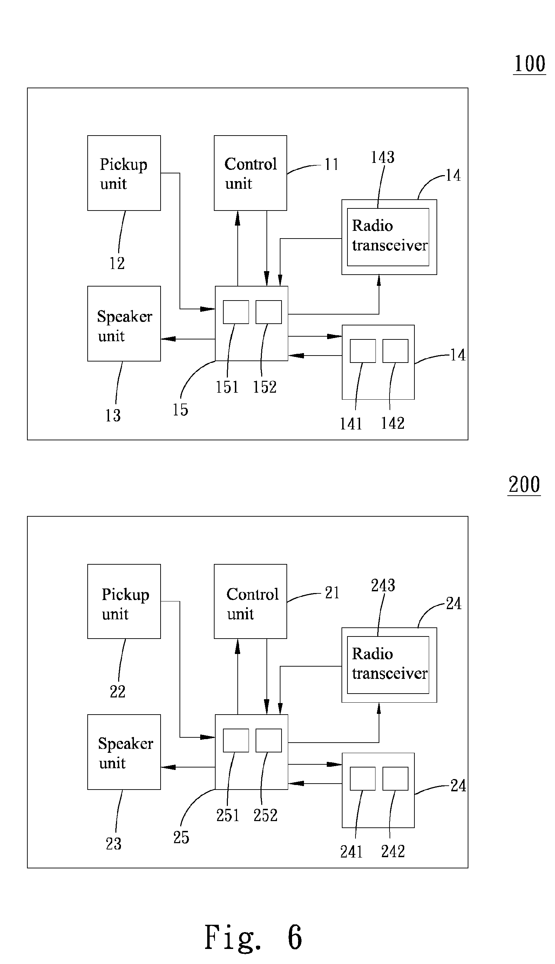

Please now refer to Figs. 5 and 6. Fig. 5 is a perspective view of a third embodiment of the present invention. Fig. 6 is a block diagram of the third embodiment of the present invention, showing the function thereof. The third embodiment is substantially partially identical to the first embodiment in structure and technical characteristic and thus will not be repeatedly described hereinafter. The third embodiment is different from the first embodiment in that the wireless transmission unit 14 of the third embodiment has the front ultrasonic transceiver 141, the rear ultrasonic transceiver 142 and a radio transceiver 143. In the third embodiment, the front and rear ultrasonic transceivers 141, 142 are identical to the front and rear ultrasonic transceivers 141, 142 of the first embodiment in structure, connection relationship and effect and thus will not be repeatedly described hereinafter.

The radio transceiver 143 is disposed on a certain section of the helmet main body 10. In this embodiment, the radio transceiver 143 is, but not limited to, a Bluetooth transceiver for illustration purposes. In practice, the radio transceiver 143 can be any other transceiver such as a WiMAX transceiver, a 3G transceiver, a 4G transceiver, a 5G transceiver or a Wi-Fi transceiver.

The wireless connection manner between the front ultrasonic transceiver 141, the rear ultrasonic transceiver 142 and the radio transceiver 143 will be described with an example as follows:
When the first user is a motorcycle rider and the second user is a passenger, both the first and second users can wear the communication helmets. When the other communication helmet 200 worn on the passenger gets close to the communication helmet 100 worn on the rider, via the rear ultrasonic transceiver 142, the control unit 11 of the communication helmet 100 worn on the rider transmits the connection information to the front ultrasonic transceiver 241 of the other communication helmet 200 worn on the passenger to make the wireless connection. In the case that the other communication helmet 200 worn on the passenger starts the coupling to search the communication helmet 100 worn on the rider, the wireless connection is also made via the transmission of the connection information. Therefore, after the communication helmet 100 and the other communication helmet 200 are wirelessly connected and coupled via the radio transceivers, in the case the rider wants to communicate with the passenger, the rider can talk to the pickup unit 12 (input the first audio signal). At this time, via the radio transceiver 143 (the Bluetooth transceiver), the control unit 11 transmits the first audio signal to the radio transceiver 243 (the Bluetooth transceiver) of the other communication helmet 200 worn on the passenger. After the radio transceiver 243 (the Bluetooth transceiver) of the other communication helmet 200 worn on the passenger receives the first audio signal, the speaker unit 23 plays out the first audio signal (output the first audio signal) for the passenger to hear the voice of the first user. When the passenger talks to the pickup unit 22 (input the second audio signal), via the radio transceiver 243 (the Bluetooth transceiver), the control unit 21 transmits the second audio signal to the radio transceiver 143 (the Bluetooth transceiver) of the communication helmet 100 worn on the rider. After the radio transceiver 143 (the Bluetooth transceiver) of the communication helmet 100 worn on the rider receives the second audio signal, the speaker unit 13 plays out the second audio signal (output the second audio signal) for the rider to hear the voice of the passenger.

Via the radio transceiver 143 (the Bluetooth transceiver), the control unit 11 of the communication helmet 100 worn on the rider transmits the connection information to the radio transceiver 243 (the Bluetooth transceiver) of the other communication helmet 200 worn on the passenger to make the wireless connection. In the case that the other communication helmet 200 worn on the passenger starts the coupling to search the communication helmet 100 worn on the rider, the wireless connection is also made via the transmission of the connection information. Therefore, after the communication helmet 100 and the other communication helmet 200 are wirelessly connected and coupled via the radio transceivers, in the case the rider wants to communicate with the passenger, the rider can talk to the pickup unit 12 (input the first audio signal). At this time, via the rear ultrasonic transceiver 142, the control unit 11 transmits the first audio signal to the front ultrasonic transceiver 241 of the other communication helmet 200 worn on the passenger. After the front ultrasonic transceiver 241 of the other communication helmet 200 worn on the passenger receives the first audio signal, the speaker unit 23 plays out the first audio signal (output the first audio signal) for the passenger to hear the voice of the first user. When the passenger talks to the pickup unit 22 (input the second audio signal), via the front ultrasonic transceiver 241, the control unit 21 transmits the second audio signal to the rear ultrasonic transceiver 142 of the communication helmet 100 worn on the rider. After the rear ultrasonic transceiver 142 of the communication helmet 100 worn on the rider receives the second audio signal, the speaker unit 13 plays out the second audio signal (output the second audio signal) for the rider to hear the voice of the passenger.

Therefore, after the wireless connection coupling between the two communication helmets is completed by means of ultrasonic wave, the audio signals of the two communication helmets can be transmitted and received by means of Bluetooth. Alternatively, after the wireless connection coupling between the two communication helmets is completed by means of Bluetooth, the audio signals of the two communication helmets can be transmitted and received by means of ultrasonic wave. The major object is that in practice, the front and rear ultrasonic transceivers 141, 142 of the wireless transmission unit 14 serve to execute the functions such as gesture identification and collision warning. In case the front and rear ultrasonic transceivers 141, 142 are shielded, the control unit 11 can turn to execute the transmission of the audio signals or connection information between the two communication helmets via the radio transceiver 143 (the Bluetooth transceiver). Alternatively, in case the device coupled with the Bluetooth transceiver has reached the upper limit, the control unit 11 can turn to execute the transmission of the audio signals or connection information between the two communication helmets via the front and rear ultrasonic transceivers 141, 142. Therefore, it is ensured that the transmission of the audio signals or connection information between the two communication helmets will not be interrupted due to the above problems.

According to the above arrangement, by means of the communication helmet 100, when riding a motorcycle, a rider can communicate with a passenger sitting on the back seat. The rider can clearly transmit information to the passenger and at the same time keep watching the condition in front of the motorcycle. Therefore, the safety in riding is promoted.

The present invention has been described with the above embodiments thereof and it is understood that many changes and modifications in such as the form or layout pattern or practicing step of the above embodiments can be carried out without departing from the scope and the spirit of the invention that is intended to be limited only by the appended claims.

## Claims

1. A communication helmet comprising:
a helmet main body;
a control unit disposed on the helmet main body;
a pickup unit disposed on the helmet main body and connected to the control unit for receiving a first audio signal input by a first user;
a speaker unit disposed on the helmet main body and connected to the control unit for outputting a second audio signal, which is transmitted from another communication helmet of a second user; and
a wireless transmission unit disposed on the helmet main body and connected to the control unit, the wireless transmission unit being wirelessly connected with the other communication helmet for transmitting the first audio signal and receiving the second audio signal.

2. The communication helmet as claimed in claim 1, wherein the control unit is set with connection information, according to the connection information, the control unit being correspondingly coupled to the other communication helmet via the wireless transmission unit.

3. The communication helmet as claimed in claim 2, wherein the wireless transmission unit has a front ultrasonic transceiver and a rear ultrasonic transceiver respectively disposed on the front side and the rear side of the helmet main body, the front and rear ultrasonic transceivers serving to transmit the first audio signal to the other communication helmet or receive the second audio signal from the other communication helmet.

4. The communication helmet as claimed in claim 2, wherein the wireless transmission unit has a radio transceiver disposed on a certain section of the helmet main body, the radio transceiver serving to transmit the first audio signal to the other communication helmet or receive the second audio signal from the other communication helmet.

5. The communication helmet as claimed in claim 2, wherein the wireless transmission unit has a front ultrasonic transceiver, a rear ultrasonic transceiver and a radio transceiver, the front and rear ultrasonic transceivers being respectively disposed on the front side and the rear side of the helmet main body, the radio transceiver being disposed on a certain section of the helmet main body, the control unit serving to transmit the first audio signal to the other communication helmet via the front and rear ultrasonic transceivers or the radio transceiver or receive the second audio signal from the other communication helmet via the front and rear ultrasonic transceivers or the radio transceiver.

6. The communication helmet as claimed in claim 4, wherein the radio transceiver is selected from a group consisting of Bluetooth transceiver, WiMAX transceiver, 3G transceiver, 4G transceiver, 5G transceiver and a Wi-Fi transceiver.

7. The communication helmet as claimed in claim 1, further comprising an encoding/decoding unit, the wireless transmission unit being connected to the control unit via the encoding/decoding unit, the encoding/decoding unit having an analog-to-digital converter and a digital-to-analog converter, the analog-to-digital converter serving to convert the first and second audio signals into a first digital signal and a second digital signal, the digital-to-analog converter serving to convert the first and second digital signals into the first and second audio signals, the control unit serving to transmit the first audio signal to the other communication helmet via the wireless transmission unit and receive the second audio signal from the other communication helmet via the wireless transmission unit.

8. The communication helmet as claimed in claim 2, further comprising an encoding/decoding unit, the wireless transmission unit being connected to the control unit via the encoding/decoding unit, the encoding/decoding unit having an analog-to-digital converter and a digital-to-analog converter, the analog-to-digital converter serving to convert the connection information into a third digital signal, the digital-to-analog converter serving to convert the third digital signals into the connection information, the control unit serving to transmit the connection information to the other communication helmet via the wireless transmission unit and receive the connection information from the other communication helmet via the wireless transmission unit to make the wireless connection.

9. The communication helmet as claimed in claim 1, wherein the control unit is a microcontroller unit or a central processing unit.

10. The communication helmet as claimed in claim 1, wherein the pickup unit is a microphone.

11. The communication helmet as claimed in claim 1, wherein the speaker unit is a speaker.

12. The communication helmet as claimed in claim 5, wherein the radio transceiver is selected from a group consisting of Bluetooth transceiver, WiMAX transceiver, 3G transceiver, 4G transceiver, 5G transceiver and a Wi-Fi transceiver.
